(19) Europäisches Patentamt
European Patent Office
Office européen des brevets

(11) **EP 4 050 748 A1**

(12) **EUROPEAN PATENT APPLICATION**

(43) Date of publication:
**31.08.2022 Bulletin 2022/35**

(21) Application number: **21159795.0**

(22) Date of filing: **27.02.2021**

(51) International Patent Classification (IPC):
**H02J 3/00** (2006.01)

(52) Cooperative Patent Classification (CPC):
**H02J 3/00;** H02J 2203/10; H02J 2203/20

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Hitachi Energy Switzerland AG
5400 Baden (CH)**

(72) Inventors:
• **SUBASIC, Milos
68161 Mannheim (DE)**
• **GIUNTOLI, Marco
64521 Groß-Gerau (DE)**

• **DALLE AVE, Giancarlo
68165 Mannheim (DE)**
• **NOGLIK, Peter
68535 Edingen-Neckarhausen (DE)**
• **BIAGINI, Veronica
68259 Mannheim (DE)**
• **KNEZOVIC, Katarina
8006 Zürich (CH)**
• **SHCHETININ, Dmitry
8106 Adlikon bei Regensdorf (CH)**

(74) Representative: **Vossius & Partner
Patentanwälte Rechtsanwälte mbB
Siebertstrasse 3
81675 München (DE)**

(54) **POWER GRID TOPOLOGY DETERMINATION**

(57) The present application relates to a method for determining a power grid topology, the method comprising: determining at least one loop of the power grid; determining a plurality of grid busses located at sections of the at least one loop of the power grid; performing at least one statistical evaluation on measured data associated with the grid busses of the plurality of grid busses to calculate weights indicating that grid busses of a section or of a segment comprising at least two adjacent sections are connected to each other; and determining a power grid topology based on the calculated weights.

The present application also relates to respective device and a respective computer program product.

Fig. 2

**Description**

The present disclosure relates to a method, a device and a computer program product for determining a topology of a power grid. In particular, this disclosure relates to a data-driven method for power grid topology error identification, i.e. for identifying errors in the power grid connectivity and correct the corresponding grid model accordingly.

With the advent of advanced monitoring tools, e.g. Supervisory Control and Data Acquisition (SCADA), smart meters, and line sensors, identifying and correcting errors in a power grid, in particular in modelling such a grid, e.g. errors in phase connections, topology or parameter errors is becoming a topic of significant importance, in particular since distribution system operators (DSO), normally do not have complete knowledge of the underlying grid. Thus, the DSOs usually cannot use model-based grid control solutions due to this lacking of detailed knowledge of the underlying grid. Such a lack of detailed measurement data is generally the highest barrier for a model-based grid control solution. Typically, such errors are manually searched for and corrected, which is very time-consuming.

Topology error identification refers to the problem of determining the current operational topology and the identification is a necessary ingredient for the majority of control and optimization problems in the dynamic and static regimes of power grid operation. Topology error identification can enable timely detection of line failures and identification of critical lines, that may affect location marginal prices.

By using an advanced metering infrastructure and smart meters at the customers' premises, an unprecedented amount of data becomes available to improve and validate the traditional power grid models.

Therefore, assuming topological errors, data-driven and graph-theory methods can be employed to utilize smart meter data, in order to identify the operational topology in which they operate and to uncover their respective neighbouring buses.

In a transmission grid, topology may be changed infrequently and can be identified by a topology processor, where topological errors are determined by a post-state estimation procedure. However, these methods have limited performance in distribution grids due to various reasons. For example, distribution grids are immense and mostly underground in many major metropolitan areas, which makes the installation of any topology identification devices time consuming and expensive. Even worse, the reconfiguration of underground distribution grids makes the methods developed for overhead transmission grids unsuitable.

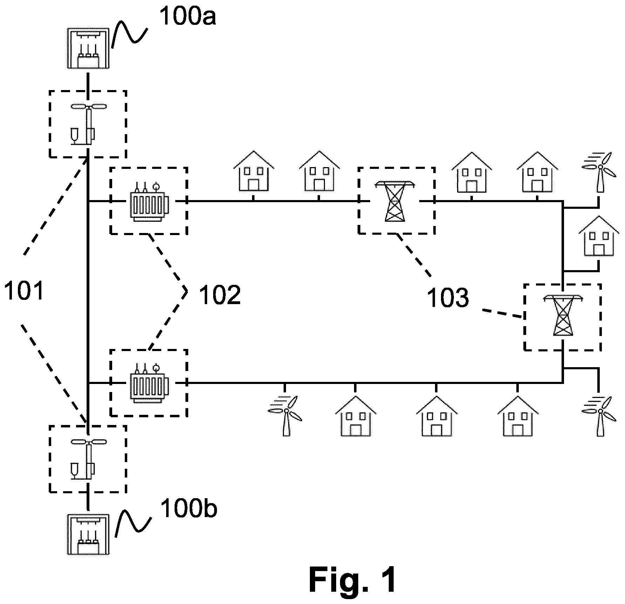

Some of the most common topological errors in a power grid are shown in Fig. 1. In detail, Fig. 1 shows a power grid between two HV/MV MV (High-Voltage/Medium Voltage) substations 100a, 100b. The power grid in Fig. 1 comprises the following topological errors: a wrong breaker status 101, a wrong transformer status 102, and wrong overhead power lines status 103.

Thus, there is a need for a method which is applicable and robust both for weakly meshed as well as radial systems, which may have a mix of single-phase and polyphase loads. Second, there is a need for a method which is able to use prior knowledge, detect the errors and can be used to correct the utility topology database, instead of identifying the operational topology from scratch. Third, there is a need for method which relies on the non-synchronized, realistic, and not completed smart meter voltage data.

The above-mentioned objects are achieved with the features of the independent claims. Dependent claims define preferred embodiments of the present disclosure.

In particular, the present disclosure relates to a method for determining a power grid topology. The method comprises determining at least one loop of the powergrid; determining a plurality of grid busses located at sections of the at least one loop of the power grid; performing at least one statistical evaluation on measured data associated with the grid busses of the plurality of grid busses to calculate weights indicating that grid busses of a section or of a segment comprising at least two adjacent sections are connected to each other; and determining a power grid topology based on the calculated weights.

Various embodiments may preferably implement the following features:
The power grid preferably comprises or is a transmission grid and/or a distribution grid.

Preferably, the measured data associated with a grid bus is measured data which is either measured directly at the grid bus or is measured data which measured remotely from the grid bus. Preferably, the measured data which is measured remotely from a grid bus is measured data of a grid component in the neighbourhood of the grid bus, more preferably in the direct neighbourhood. Preferably, the measured data which is measured remotely from a grid bus may be measured at a section neighbouring the section at which the grid bus is located. Preferably, the measured data associated with a grid bus is measured data from a grid component being or comprising an electricity meter, e.g. a smart meter, which is closest to the grid bus. Preferably, the grid component which is closest to a respective grid bus has the smallest impedance to the respective grid bus. In other words, the grid component which is closest to a respective grid bus has the smallest electrical distance to the respective grid bus. Preferably, the measured data associated with a grid bus is measured data which is either measured directly at the grid bus or is measured data from a grid component being or comprising an electricity meter, e.g. a smart meter, which is closest to the grid bus.

Preferably, a segment comprising at least two adjacent sections refers to/is a segment being formed of at least two adjacent sections.

A grid bus located between two sections of the segment may have no measured data associated with said grid bus. Then, preferably, the at least one statistical evaluation is performed to calculate a weight indicating that two grid busses located at end points, one of the two grid busses at each end point, of said segment are connected to each other.

Preferaby, a grid bus is a connection point of a power grid. Preferably, there is one section between two neighbouring grid busses. Preferably a grid bus can also have only one neighbouring bus, e.g. at the end of a lateral of the power grid.

Preferably, it is determined that two grid busses of a section or a segment are not connected to each other if the weight calculated by performing the at least one statistical evaluation is below a predetermined threshold and/or if the calculated weight is the lowest of the weights calculated for the at least one loop.

Preferably, the grid component comprises or is an electricity meter. Preferably, the grid component comprises or is a load, an electricity meter connected to a load, a capacitor, a capacitor bank, a voltage regulator and/or a transformer. Preferably, the electricity meter connected to a load is a smart meter.

The measured data associated with the grid busses of the plurality of grid busses preferably comprise measured voltage data, more preferably a time series of measured voltage data, voltage magnitude data, at least one time series of voltage magnitude data, voltage deviation data, at least one time series of voltage deviation data, and/or measured breaker status data. Preferably, the measured data associated with a grid bus is preprocessed. The preprocessing preferably comprises normalizing the measured data, more preferably to obtain a zero mean and unit variance.

Preferably, the at least one loop of the power grid is determined based on topology data of the power grid, more preferably from a database. The database preferably is a Geographic Information System (GIS) database. Preferably, topology data are provided from a grid operator. Preferably, the topology data comprise the number of phases of the grid busses of the power grid. Preferably, the topology data comprise information on grid busses. Preferably, the topology data comprise information on sections which are (available) in the power grid.

Perferably, the method further comprises iterating: the determining at least one loop of the power grid based on topology data of the power grid, the determining a plurality of grid busses, the performing at least one statistical evaluation, the determining a power grid topology. Preferably the method comprises updating the topology data based on the determined power grid topology. The determining at least one loop of the power grid preferably is based on topology data of the power grid from a database and the updating the topology data based on the determined power grid topology is preferably updating the topology data in the database based on the determined power grid topology. Preferably, the at least one statistical evaluation is performed on various measured data associated with the plurality of grid busses per iteration. The various measured data is preferably different measured data. The various measured data is preferably measured data from different instances of time. In other words, the at least one statistical evaluation is preferably performed on measured data from a first instance of time and from a second instance of time, in particular from a later instance of time, in a further interation, more preferab in the next iteration. Thus, the iterations are preferably performed in a rolling horizon manner. Using iterations may have the advantageous effect that a confidence score of the updated topology data can be calculated. Preferably, a confidence score of the updated topology data is calculated.

Preferably, the at least one loop of the power grid is determined using a graph algorithm, in particular using a set of cycles which forms a basis of a cycle space of a graph of the graph algorithm.

Preferably, the determining a power grid topology is performed using a graph theory algorithm. The graph theory algorithm is preferably a directed maximum spanning tree algorithm.

Preferably, at least one grid bus of the plurality of grid busses of the at least one loop has a phase connection with more than one phase, preferably two phases, more preferably three phases. Perferably, the measured data associated with a grid bus having a phase connection with more than one phase is preprocessed by averaging the measured data associated with respective phase of the grid bus. Preferably, at least two grid busses of a section or a segment have a phase connection with more than one phase, and the at least one statistical evaluation is performed on measured data from a phase which is present in the phase connections of the at least two grid busses.

The at least one statistical evaluation is preferably at least one of: Pearson correlation; Least Absolute Shrinkage and Selection Operator (LASSO); Least Absolute Shrinkage and Selection Operator with Least Angle Regression (LASSOLARS); mutual information (MI); or conditional independence. Preferably, a combination of statistical evaluations is performed. Preferably, at least two statistical evaluations on measured data associated with the grid busses of the plurality of grid busses to calculate weights indicating that grid busses of a section or of a segment comprising at least two adjacent sections are connected to each other is performed. The calculated weights of the two statistical evaluations of the grid busses of a section or a segment are preferably summarized. Preferably, the summarized weights are divided by the number of used statistical evaluations. The calculated weights of the two statistical evaluations of the grid busses of a section or a segment are preferably summarized or combined using a weight function. Preferably, a combination of Pearson correlation, LASSOLARS, MI and conditional independence is used.

Preferably, the measured data associated with the grid busses of the plurality of grid busses is divided into a plurality of portions. Perferably, each portion comprises measured data associated with the grid busses of the plurality of grid busses. Preferably, the performing at least one statistical evaluation is performed for each portion. Confidence scores are preferably calculated for the weights indicating that grid busses of a section or of a segment comprising at least two adjacent sections are connected to each other based on the occurrence of the weights in the portions.

The method preferably comprises evaluating an existing power grid topology based on the determined power grid topology.

The method preferably comprises identifying at least one fault in the power grid based on the determined power grid topology. The at least one fault is preferably a short-circuit.

The method preferably comprises determining a status of at least one breaker in the power grid based on the determined power grid topology.

The present disclosure also relates to device for determining a power grid topology. The device comprising a memory, in particular a non-transitory memory, for storing computer instructions and a processor in communication with the memory, wherein, when the processor executes the computer instructions, the processor is configured to carry out the method as described above.

The present disclosure also relates to a computer program product comprising instructions which, when the program is executed by a computer, cause the computer to carry out the as described above.

It is one aspect of the present disclosure to use a hybrid approach combining statistic coefficients for weighing network branch probability with a graph theory algortithm, e.g. Edmonds algorithm for detection of the optimal branching and spanning arborescence, e.g. for the most promising radial distribution grid.

It is a further general aspect of the present disclosure to generate a list of most probable open branches, i.e. wrong entries in a GIS database, for a potential loop in the grid.

In detail, the present disclosure also relates to a hybrid approach, which combines the statistic coefficients for weighing network branch probability with a graph forming algorithm for detection of the most likely branching and spanning. Furthermore, as a result, a list is obtained of most probably wrong database entries and the most probably operating topology is detected. Instead of manual field check, an operator may check one-by-one aforementioned list of possibly wrong connections in the database and reruns the method until all the incorrect entries in the database are discovered and fixed.

According to the present disclosure the method may be run automatically and may include automatic tuning of the relevant algorithm hyperparameters.

The method according to the present disclosure has the following advantage that it covers a broad range of power grids and their respective connection types and assets, both meshed and radial grids operated in active or passive regime. Furthermore, it facilitates the automation of updating the corresponding power grid model and reduces the necessity for manual inspections. Still further, it allows quicker updating of the corresponding power grid model due to anticipated or unknown grid reconfiguration and changes, since it indicates to the expert where the potential sources of errors are.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The above and other aspects and their implementations are described in greater detail in the drawings, the descriptions, and the claims.

Fig. 1 illustrates an exemplary power grid with topological errors.

Fig. 2 shows a flowchart of a method according to an embodiment of the present disclosure.

Fig. 3 illustrates a power grid or at least a port of the power grid according to an embodiment of the present disclosure.

Fig. 4 illustrates a grid busses of a loop having polyphase phase connections according to an embodiment of the present disclosure.

Fig. 5 illustrates calculated and summarized weights indicating that grid busses are connected according to an embodiment of the present disclosure.

Fig. 6 shows a flowchart of a method according to an embodiment of the present disclosure.

In the following, exemplary embodiments of the present disclosure will be described. It is noted that some aspects of any one of the described embodiments may also be found in some other embodiments unless otherwise stated or obvious. However, for increased intelligibility, each aspect will only be described in detail when first mentioned and any repeated description of the same aspect will be omitted.

An embodiment of the present disclosure is configured to identify errors in the operation of power grids due to at least one wrong database entry or at least one grid assets status not updated properly, e.g. breaker status or line status after an outage.

In other words, the embodiments of disclosure may serve as a basis for facilitating the use of advanced model-based applications, such as voltage control or optimal power flow that cannot work properly due to wrong grid topology.

According to an embodiment, the method according to the present disclosure may be based on at least one of the following prerequisites. First, all the possible connections, e.g. overhead lines, cables, transformers, and all the other components that could connect two power grid busses are well stored in a database, i.e. at best, there are no errors related to the knowledge of their position in the power grid, i.e. connected from/to. The single source of uncertainty is related to the component status, i.e. if it is energized or not. Second, the power grid under test may be radial or meshed. Third, the power grid under test is fully energized, i.e. fully connected and each grid bus must be electrically reachable starting from another grid bus in the grid. Fourth, measured data, e.g. one voltage magnitude time series, associated with each grid bus of the power grid is available. In case of a polyphase grid bus, only the average through the phases may be needed. The approach of the present disclosure still works using less input granularity, i.e. the measured data, e.g., voltages, of some grid buses may be unknown, but it creates results with potentially less accuracy. That is, if between two measured grid buses there is more than one branch/section or segment, e.g. two sections, it is still possible to identify the segment's status of the segment comprising the two sections, but in case of an open segment, it may not be possible to identify the single section, which is open. Fifth, the phase connection of each grid bus may be available in order increase the output quality.

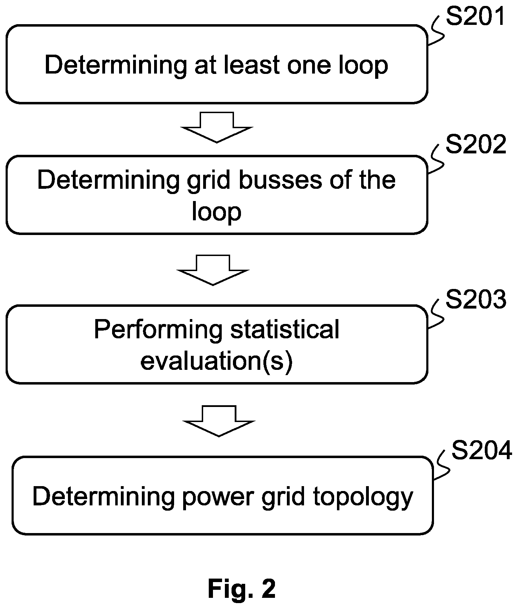

Fig. 2 shows a flowchart of a method according to an embodiment of the present disclosure.

In S201, at least one loop of the power grid is determined. Said loop determination is performed based on topology data of the power grid. Said topology data may be provided from a database, e.g. provided from a grid operator. The topology data may comprise the number of phases of grid busses of the power grid. This information may be used to avoid unrealistic grid loops between sections with different phases connection. The topology data may comprise as an alternative or in addition information on grid busses and/or sections which are (available) in the power grid.

Although the obtaining of the topology data is not part of the method shown in the embodiment in Fig. 2, it is understood by the skilled person that the obtaining/receiving of the data may also be part of certain embodiments of the present disclosure.

According to an embodiment of the present disclosure, the loop determination may find the smallest potential loops (cycles) inside the power grid. The power grid, e.g. a distribution grid, may be considered as a graph, e.g. an undirected graph. A cycle basic of an undirected graph is a set of simple cycles that forms a basis of the cycle space of the graph. That is, it is a minimal set of cycles that allows every even-degree subgraph to be expressed as a symmetric difference of basis cycles. In the graph, a cycle of the graph corresponds to a loop of the power grid.

According to an embodiment of the present disclosure, a fundamental cycle basis may be formed from any spanning tree or spanning forest of the given graph, by selecting the cycles formed by the combination of a path in the tree and a single edge outside the tree. Alternatively, if the edges of the graph have positive weights, the minimum weight cycle basis may be constructed in polynomial time.

According to an embodiment of the present disclosure, a planar graph is used. In planar graphs, the set of bounded cycles of an embedding of the graph forms a cycle basis. The minimum weight cycle basis of a planar graph may correspond to a Gomory-Hu tree of a dual graph.

By employing a method according to the disclosure, the loop(s) contained in the power grid can be determined, based on topology data, e.g. provided by a database. The same weight, i.e. 1, for each branch/section of a loop may be used.

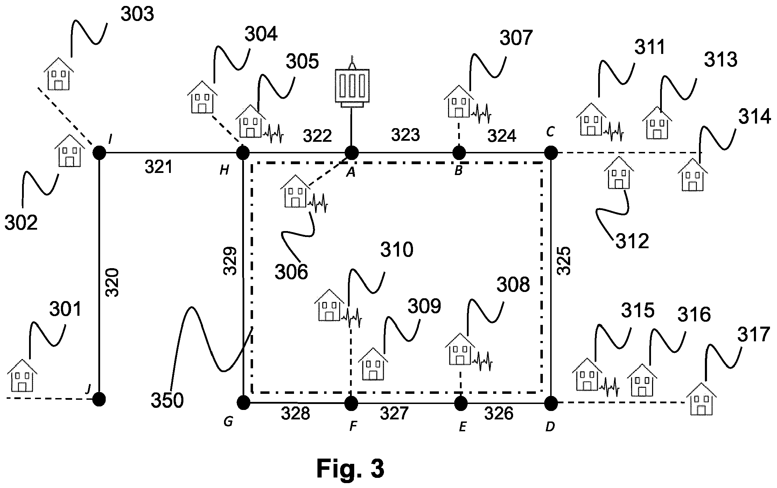

In S202, a plurality of grid busses located at sections of the at least one loop of the power grid is determined. Fig. 3 illustrates a power grid or at least a port of the power grid according to an embodiment of the present disclosure. The power grids comprises several grid busses denoted with "A" to "J". Sections 320 to 329 are between the grid busses A to J. In particular, there is one section between two directly neighbouring grid busses. For example, in Fig. 3, between grid bus J and I, there is section 320 and between grid bus I and H, there is section 321. Thus, grid bus I is located at section 320 and section 321. Fig. 3 further shows grid components 301 to 317. The grid components 301 to 317 in Fig.

3 are exemplary shown as private homes but the present disclosure is not limited to this. The grid components may comprise or be a load, an electricity meter, e.g. a smart meter, connected to a load, a capacitor, a capacitor bank, a voltage regulator and/or a transformer. The grid components 305, 307, 308, 310, 311, 315 comprise an electricity meter, e.g. a smart meter. According to this embodiment of the present disclosure, in S201, the loop 350 indicated with a dash-dotted line is determined and in S202, the grid busses A, B, C, D, E, F, G, H of the loop are determined. The grid busses A, B, C, D, E, F, G, H are located at sections 322, 323, 324, 325, 326, 327, 328, and 329 of the loop.

In S203, at least one statistical evaluation on measured data associated with the grid busses of the plurality of grid busses of the loop is performed to calculate weights indicating that grid busses of a section or of a segment comprising at least two adjacent sections are connected to each other. For example, in the embodiment shown in Fig. 3, a weight is calculated that is indicating that bus H is connected to bus A. In the example shown in Fig. 3, the grid component 305 is directly connected to grid bus H and the measured data, here measured time series of voltage magnitude, of the grid component 305 is associated with the grid bus H. The grid component 306 is directly connected to grid bus A and the measured data of the grid component 306 is associated with the grid bus A. As grid bus H and grid bus A are located at (the same) section, 322, the at least one statistical evaluation is performed on the measured data associated with grid bus H, i.e. from the grid component 305, and on the measured data associated with grid bus A, i.e. the measured data from the grid component 306. Grid bus C has no grid component which is directly connected to it but has a grid component 311 comprising an electricity meter which is in its neighbourhood. The measured data of grid component 311 is associated with the grid bus C. The same applies to grid bus D and measured data from grid component 315. For grid bus F, the grid component 309 which is directly at the grid bus F has no electricity meter. However, grid component 310 is the closest to grid bus F and the measured data from grid component 310 is the measured data associated with grid bus F. Grid bus F and grid bus E are located at section 327 and the at least one statistical evaluation is performed on the measured data associated with grid bus F and on the measured data associated with grid bus E. Grid bus G does not have an electricity meter and also does not have a grid component connected to it, in particular not a grid component with an electricity meter. Thus, there is no measured data associated with grid bus G. In this case, sections 328 and 329 form a segment and grid bus H is located at an end point of said segment and grid bus F is located at the other end point of the segment. The at least one statistical evaluation is performed on the measured data associated with grid bus F and on the measured data associated with grid bus H. Thus, a weight that the two busses H and F are connected to each other can be calculated. Although the obtaining of the measured data associated with a bus is not part of the method shown in the embodiment in Fig. 2, it is understood by the skilled person that the obtaining/receiving of the data may also be part of certain embodiments of the present disclosure. According to an embodiment of the present disclosure, the measured data associated with a grid bus is preprocessed. The preprocessing may comprise normalizing the measured data to obtain a zero mean and unit variance.

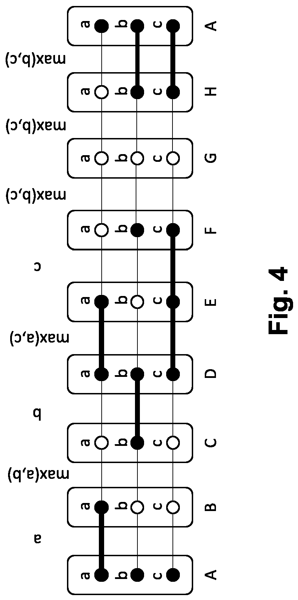

According to an embodiment of the present disclosure, the phase connection of the grid busses are polyphase, i.e. the grid busses have phase connections with more than one phase. Such a case is exemplarily shown in Fig. 4 where the grid busses are denoted with capital letters "A" to "H" and the phases of the grid busses are denoted with "a" to "b". The grid busses shown in Fig. 4 correspond to the grid busses of the loop exemplarily shown in Fig. 3. In the example shown in Fig. 4, grid bus A is connected to phase "a" and grid bus B is connected to phase "a" as well. Thus, measured data associated with grid bus A from phase "a" and measured data associated with grid bus B from phase "a" can be used for the at least one statistical evaluation.

According to an embodiment of the present disclosure, four statistical evaluations are performed in S203, which are described in detail below, Pearson correlation, LASSOLARS, Mutual Information and Conditional Independence, but the present disclosure is not limited to this. The statistical evaluation(s) may be performed to correlate the measured data and correct topology data.

*Pearson correlation*

According to an embodiment of the present disclosure, determining a pearson correlation is one of the statistical evaluations to be performed. In an embodiment of the disclosure, correlation coefficients are used to measure how strong a relationship between two variables is. In an embodiment of the disclosure, the Pearson product-moment correlation coefficient, or Pearson correlation coefficient, r, for short, may be applied on the measured data. Coefficient r is a measure of the strength of a linear association between these two variables.

Basically, a Pearson product-moment correlation attempts to draw a line of best fit through the measured data, and the Pearson correlation coefficient, r, indicates how far away all the data points are to this line of best fit, i.e., how well the data points fit this new model/line of best fit.

The Pearson correlation coefficient, r, can take a range of values from +1 to -1. A value of 0 indicates that there is no association.

According to an embodiment of the disclosure, the determining a Pearson correlation outputs the Pearson correlation matrix of the grid buses of the selected loop and the next stage of the embodiment may use the absolute value of the correlation matrix.

*LASSO(LARS)*

According to an embodiment of the present disclosure, Least Absolute Shrinkage and Selection Operator with Least Angle Regression (LASSOLARS) is one of the statistical evaluations to be performed. In this embodiment of the disclosure, fitting the measured data in order to retrieve the edges of the connected graph is performed by fitting the measured datasets, in their absolute and deviation forms. This may be achieved by running the regression algorithm LassoLars. LassoLars regression is a type of linear regression that uses shrinkage. Shrinkage is where data values are shrunk towards a central point, like the mean.

The Lasso procedure encourages simple, sparse models, i.e. models with fewer parameters. This feature is particularly convenient, because a typical power grid is not fully connected. Therefore, the graph is sparse and many non zero coefficients are found in $\beta^s$, which indicates the statistical dependence between two nodes, i.e. grid busses, are zero, see below.

A widely used constraint to ensure the sparsity is L1 norm because it leads to a convex optimization problem and can be solved efficiently. Lasso minimizes the sum of squared errors with a bound on the sum of the absolute values of coefficients, i.e. L1 norm. With L1 norm penalty, the linear regression in is formulated as:

$$\widehat{\beta^s} = arg\min\left\{\sum_{t=1}^{N}(V_s^t - (\boldsymbol{V}_{S\setminus\{s\}}^t)^T\beta^s)^2 + \lambda\|\beta^s\|\right\}$$

Here, $\boldsymbol{V}_{S\setminus\{s\}}^t$ corresponds to the voltage datasets in all the nodes except the node, grid bus, which is currently analysed and $\lambda$ denotes the regularization parameter. $\widehat{\beta^s}$ denotes estimated parameter vector of statistical dependences between two nodes, $V_s^t$ denotes the voltage dataset of the estimated node and $\|\beta^s\|$ denotes a penalty term.

In an embodiment of the disclosure, however, it may be necessary to understand the importance of each variable in the regression. This is where the concept of a gifted regressor, LassoLars, becomes important. It performs the feature selection with its own cross-validation and finds the optimum parameters of the line to give the best fit line passing through the best features.

In an embodiment of the disclosure, the correlation may be represented in terms of the cosine of the angle between the output variable and the predictor. If a predictor is parallel to the output variable, the angle between them is 0 and correlation is 1. In the vector sense, then the output variable $y$ is just $c . x_1$ where $y$ and $x_1$ are the output and predictor vectors.

If the correlation is not 1, then other predictors which explain the difference $y - (b_1 \cdot x_1)$ are needed, where $b_1$ is the coefficient of $x_1$.

*Mutual Information*

According to an embodiment of the present disclosure, mutual information is one of the statistical evaluations to be performed. In probability and information theory, the mutual information, MI, of two random variables is a measure of the mutual dependence between them. More specifically, MI quantifies the "amount of information", in units commonly called bits, obtained about one random variable through observing the other random variable. The concept of mutual information is closely linked to that of entropy of a random variable, a fundamental notion in information theory that quantifies the expected "amount of information" held in a random variable.

Not limited to real-valued random variables and linear dependence like the correlation coefficient, MI is more general and determines how different the joint distribution of the pair $(X, Y)$ is to the product of the marginal distributions of $X$ and $Y$. MI is the expected value of the pointwise mutual information, PMI.

For two variables $X$ and $Y$ whose joint probability distribution is $P_{XY}(x,y)$, the mutual information between them, denoted $MI(X; Y)$, is defined as:

$$MI(X;Y) = \sum_{x,y} P_{XY}(x,y) \log \frac{P_{XY}(x,y)}{P_X(x)P_Y(y)} = E_{P_{XY}} \log \frac{P_{XY}}{P_X P_Y}$$

Here $P_X(x)$ and $P_Y(y)$ are the marginals $P_X(x) = \sum_y P(x, y)$ and $P_Y(y) = \sum_x P(x, y)$ while $E_P$ is the expected value over the distribution $P$.

*Conditional Independence*

According to an embodiment of the present disclosure, mutual information is one of the statistical evaluations to be performed. In probability theory, two random events A and B are conditionally independent given C, if and only if, given knowledge that C occurs, knowledge of whether A occurs provides no information on the likelihood of B occurring, and knowledge of whether B occurs provides no information on the likelihood of A occurring.

This general definition is translated considering the distribution grid as the radial distribution tree $\mathcal{T}$ with a substation as reference node and given set of all possible edges $\varepsilon$, operational or open. In an embodiment of the disclosure, a topology error correction method based on conditional independence may be employed to determine which of the operational edge set $\mathcal{E}_{\mathcal{T}}$ load nodes $\mathcal{V}_{\mathcal{T}}$ is active using measured data, e.g. load voltage measurements, in an invertible power flow model.

In an embodiment of the disclosure, the results of conditional independence of voltage measurements in the graphical model $\mathcal{GM}$ may be used. Compared to the existing approaches based on topology reconstruction from scratch, an embodiment of the disclosure may take the existing topology and tests the edges one by one.

In an embodiment of the disclosure, the results from the different tests are then aggregated to determine the confidence of each edge being in the operational topology. The method is based on the following properties:

- If (ab) is an operational edge between non-leaf nodes a and b in $\mathcal{T}$, there exists distinct nodes c and d with

$$\mathcal{P}(V_{c'}V_d|V_{a'}V_b) = \mathcal{P}(V_c|V_{a'}V_b)\,\mathcal{P}(V_d|V_{a'}V_b)$$

- If (ab) is not an operational edge, then $\mathcal{P}(V_{c'}V_d|V_{a'}V_b) = \mathcal{P}(V_c|V_{a'}V_b)\,\mathcal{P}(V_d|V_{a'}V_b)$ does not hold for any nodes c and d distinct from a and b in $\mathcal{T}$.

- If nodes a and b are separated by greater than two hops, then there exists at least one operational edge (cd) in $\mathcal{T}$ with $\mathcal{P}(V_{a'}V_b|V_{c'}V_d) = \mathcal{P}(V_a|V_{c'}V_d)\,\mathcal{P}(V_b|V_{c'}V_d).$

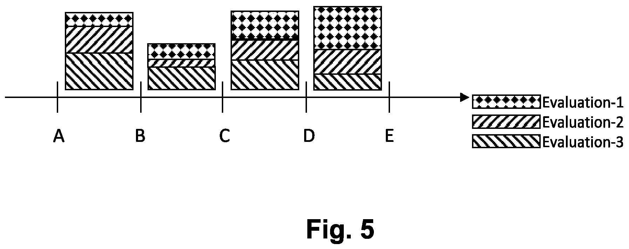

According to an embodiment of the present disclosure, combining the result of any number of said evaluations, a so-called score table is defined for each possible connection. According to an embodiment of the present disclosure, the results of the evaluations, i.e. the calculated weights resulting from the evaluations for a possible connection are summarized. The summarized weights may be divided by the number of used statistical evaluations. The calculated weights of the two statistical evaluations of the grid busses of a section or of a segment may be summarized or combined using a weight function. Such a weight function is known to the skilled person. An exemplary summarizing of the calculated weights is shown in Fig. 5 for four grid busses "A" to "E" of a loop and three performed statistical evaluations. In the embodiment shown in Fig. 5, the calculated weights for each connection are summarized. According to an embodiment, the summarized weight for a possible connection between grid bus B and C is below a certain predefined threshold or is the lowest in the loop and it is likely that the section between grid bus B and C is open, i.e. it is an open branch, and there is no connection between grid bus B and C.

In S204, a power grid topology is determined based on the calculated weights. According to an embodiment of the present disclosure, said determining is performed using a graph theory algorithm. Said graph theory algorithm may be a directed maximum spanning tree algorithm. Such a spanning tree algorithm may be an Edmonds' algorithm. Such an algorithm by be used to solve the maximum spanning tree problem for a directed graph. In an embodiment of the disclosure, to find the most promising radial solution, each single branch, i.e. section or segment in the loop is weighted using the sum of the statistic parameters. Therefore, the embodiment is able to identify the solution, in which the grid if fully connected radial and the sum of the weights for the selected, i.e. on-line, branches is the maximum, i.e.

the most promising on-line topology.

According to an embodiment of the present disclosure, the topology data is updated based on the determined power grid topology in S204. The procedures S201 to S204 may be iterated. The topology data may then be updated, e.g. in a data base, e.g. the database from which the topology data is received, after each iteration. The at least one statistical evaluation in S203 may be performed on various measured data associated with the plurality of grid busses per iteration. According to an embodiment of the present disclosure, the at least one evaluation in S203 performed on measured data from a first instance of time in an iteration and from a second instance of time in another iteration, in particular from a later instance of time, in the next iteration. Thus, the iterations may be performed in a rolling horizon manner.

According to an embodiment of the present disclosure, the calculated, and in case of more than one statistical evaluation, combined weights are ordered in an ascending order, so the branches, e.g. sections or segments, with the highest probability to be open are reported on top of the list (only the branches in the potential loops may be analysed). As a result, an operator may check one-by-one this set of possibly open connections in a database. In an embodiment of the disclosure, in the post processing phase, the branches that create the loop(s) are stacked in a list. The list may be ordered with the lowest weight first, and the maximum spanning tree result reports the most suitable radial topology.

In an embodiment of the disclosure, an operator may inspect for each identified loop, the list from the top and verify with a (potential) field inspection the first entry: if the (potential) field inspection reports an open connection, due to the grid radiality, the other branches have to be closed and a topology calibration may be finished. In case of false errors, the operator may further inspect the list (second entry and so on) and repeat the analysis until the open branch is found.

In case of a meshed grid, i.e. potentially all the branches in the loop are in service, a method of the present disclosure may be applied to find possible open branches in the loops. However, not finding open branches in the top section of the list, a method according to the present disclosure may be used for a real grid loop, i.e. a meshed grid.

According to an embodiment of the present disclosure, an existing power grid topology is evaluated based on the determined power grid topology.

According to an embodiment of the present disclosure, at least one fault in the power grid is identified based on the determined power grid topology.

According to an embodiment of the present disclosure, a status of at least one breaker in the power grid is determined based on the determined power grid topology.

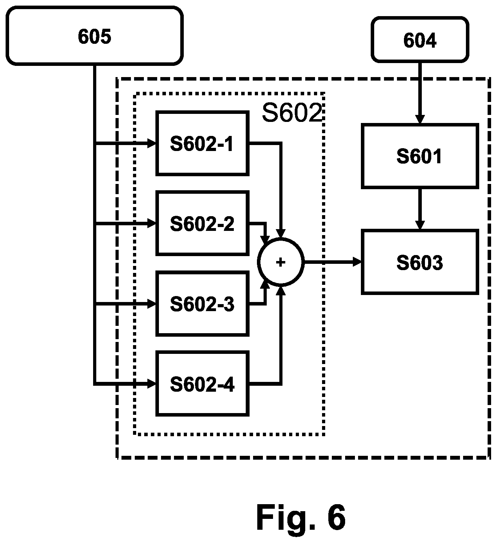

Fig. 6 shows an illustration of a method 610 according to an embodiment of the present disclosure. In S601, at least one loop of the power grid is determined based on topology data 604 received from a database. Then a plurality of grid busses located at sections of the at least one loop of the power grid is dertermined (not shown). In S602, four statistical evaluations on measured data associated with the grid busses of the plurality of grid busses are performed and weights are calculated indicating that grid busses of a section or of a segment comprising at least two adjacent sections are connected to each other. In S602, according to this embodiment of the present disclosure, four statistical evaluations are performed on measured data 605 associated with the grid busses, namely Pearson Correlation S602-1, LASSOLARS S602-2, Mutual Information S602-3, and Conditional Independence S602-3 and the weights which are calculated are combined. Then, in S603 a power grid topology based on the calculated weights is determined.

*Proof-of-concept and experimental results*

Defining the right key performance indicators, KPI for the topology calibration may be challenging, in particular due to the statistical nature of the approach and the deterministic topology (classification, i.e. connected or not connected). Moreover, the standard KPIs from graph theory may not be applied due to:

1. A simple KPI saying false positive and/or false negative connection may be too severe for a statistical approach due to the poor granularity (i.e. 100% for a right connection detection or 0% in case of a wrong connection detection); and

2. A KPI based on graph similarity may be too generous due to the extremely low ratio between errors and branches stored in the database. The result may be close to 100% without providing a good measure of performance.

In an embodiment of the disclosure, in order to have a more realistic KPI measuring the actual performance, i.e. output quality, the following conditions may be considered :

1. The method may be performed only considering the identified loops. All the remaining parts, e.g. laterals, may be excluded as the grid may be considered as fully energized, i.e. radial laterals have only one possible solution.

2. The KPI may be normalized, based on the topology size and topology errors;

3. When considering a radial grid, identifying a single open branch (with the lowest weight) in the loop means that all the other branches may be closed (on-line) and thus the topology may be fully known/identified. Moreover, in case of a radial grid but with more than one overlapping loop, it may be possible to find two open connections in the same loop. Even in this case, without loss of generality, identifying one single open connection in each loop may solve the entire topology;

4. In case of a (weakly) meshed grid, the assumption under item 3 above may not be true anymore but it may still be possible to analyse potential open connections inspecting the ordered candidate list from the top.

Based on these conditions, the following KPI may be used according to an embodiment of the present disclosure:

$$KPI = 100 \times \frac{Loop_{length} - \Omega}{Loop_{length}}$$

- $Loop_{length}$ is the total number of branches for each identified loop; and
- $\Omega$ is the total number of *false entries (errors)* before the ground truth topology is identified, i.e. in case of a radial grid, it is the position number, minus one, of the real open branch in the ordered loop list.

For better understanding, the following table shows four examples:

Table 1

| Case 1 | | Case 2 | | Case 3 | | Case 4 | |
|---|---|---|---|---|---|---|---|
| **1** | **0.18** | *1* | *0.33* | **1** | **0.18** | **1** | **0.11** |
| *2* | *0.33* | 2 | 1.00 | *2* | *0.33* | **2** | **0.13** |
| 3 | 1.00 | | | *3* | *1.00* | **3** | **0.15** |
| 4 | 1.23 | | | | | **4** | **0.18** |
| 5 | 1.25 | | | | | *5* | *0.33* |
| 6 | 2.00 | | | | | **6** | **1.00** |
| | | | | | | 7 | 1.23 |
| | | | | | | 8 | 1.25 |
| | | | | | | 9 | 2.00 |
| Loop length=6 False error entries before the right ones ($\Omega$) = 1 (false entry in bold font) | | Loop length = 2 False error entries before the right ones ($\Omega$) = 0 | | Loop length = 3 False error entries before the right ones ($\Omega$) = 1 (false entry in bold font) | | Loop length False error before the ones ($\Omega$) entry in = 9 entries right = 5 (false bold font) | |
| $\dfrac{6 - 1}{6} = 83\%$ | | $\dfrac{2 - 0}{2} = 100\%$ | | $\dfrac{3 - 1}{3} = 67\%$ | | $\dfrac{9 - 5}{9} = 44\%$ | |

The false errors entries are highlighted in bold type. For those entries, the method according to an embodiment of the present disclosure suggests an open loop connection at a branch which is actually closed.
Inspecting the tables from the top, *false errors,* in bold, an open connection may be determined when in reality that is not the case.
In Italic font in the table, the corrected identified open connections and, obviously, the KPI can be calculated knowing the ground truth. In case of more than one loop in the grid, the resulting KPI may be the average through all the loops.

*Results*

This section shows the results of different test cases using a method according to an embodiment of the present disclosure. The following table shows the results of radial and meshed grids.

Table 2

| ID | Grid | Load Scenario | Raw data errors | Grid Type | Potential loops | Loops lenght (number of branches) | KPI Avarage over all loops |
|---|---|---|---|---|---|---|---|
| 1 | IEEE123 Switched | Austria | None | Radial | 3 | 26,10,8 | 93% |
| 2 | IEEE123 Switched | Austria | IEC 0.1 + Bias | Radial | 3 | 26,10,8 | 93% |
| 3 | IEEE123 Switched | Portugal | None | Radial | 3 | 26,10,8 | 93% |
| 4 | IEEE123 Switched | Portugal | IEC 0.1 +Bias | Radial | 3 | 26,10,8 | 93% |
| 5 | IEEE123 Switched | Portugal new | None | Radial | 3 | 26,10,8 | 93% |
| 6 | IEEE123 Switched | Portugal new | IEC 0.1 +Bias | Radial | 3 | 26,10,8 | 93% |
| 7 | 240Bus Iowa | Iowa | None | Radial | 5 | 28,13,17,9,15 | 97% |
| 8 | 240Bus Iowa | Iowa | IEC 0.1 +Bias | Radial | 5 | 28,13,17,9,15 | 89% |
| 9 | 240Bus Iowa | Iowa | None | Meshed | 5 | 28,13,17,9,15 | 96% |
| 10 | 240Bus Iowa | Iowa | IEC 0.1 +Bias | Meshed | 5 | 28,13,17,9,15 | 96% |
| 11 | 240Bus Iowa switched | Iowa | None | Radial | 5 | 28,13,17,9,15 | 95,5% |
| 12 | 240Bus Iowa switched | Iowa | IEC 0.1 +Bias | Radial | 5 | 28,13,17,9,15 | 85,6% |

All the potential loops according to this embodiment are created considering all the breakers in the original grid data, i.e. database, and random, i.e. wrong, connections. Each grid/scenario has been tested using perfect field data, i.e. voltage profile for each bus, and field data affected by noise based on IEC 0.1 class smart meter and Bias errors.

The last column returns the KPI average over the loops in the grid. For both grids, the KPI without measurement errors is >90%, in detail 97%, 93%, and 96%, while in case of noise there is a small quality derating down to 86%.

From the results of this proof-of-concept, it is evident that open connections in radial grids and ultimately all the potential errors in the database and in the operational topology can be identified according to a method according to the present disclosure, in particular using a combination of a set of statistical parameters and graph theory. In the case of meshed grids, the result might be further be interpreted by an operator, i.e. discovering an open connection might not exclude the presence of another one in the loop. However, this can be further improved, using, for example, polyphase measured data and not the average or using additional measurements.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative methods, logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the present disclosure is not intended to be limited to the implementations shown herein, but is to be accorded the widest scope consistent with the novel features and principles disclosed herein, as recited in the claims below.

**Claims**

1.  A method for determining a power grid topology, the method comprising:

    determining at least one loop of the power grid;
    determining a plurality of grid busses located at sections of the at least one loop of the power grid;
    performing at least one statistical evaluation on measured data associated with the grid busses of the plurality of grid busses to calculate weights indicating that grid busses of a section or of a segment comprising at least two adjacent sections are connected to each other; and
    determining a power grid topology based on the calculated weights.

2.  Method according to claim 1, wherein the at least one loop of the power grid is determined based on topology data of the power grid from a database.

3.  Method according to claim 1 or 2, wherein the method further comprises iterating:

    the determining at least one loop of the powergrid based on topology data of the power grid,
    the determining a plurality of grid busses,
    the performing at least one statistical evaluation,
    the determining a power grid topology, and
    updating the topology data based on the determined power grid topology,
    in particular wherein the at least one statistical evaluation is performed on various measured data associated with the plurality of grid busses per iteration.

4.  Method according to any one of claims 1 to 3, wherein the measured data associated with the grid busses of the plurality of grid busses comprise at least one of a time series of measured voltage data or measured breaker status data.

5.  Method according to any one of claims 1 to 4, wherein the at least one loop of the power grid is determined using a graph algorithm, in particular using a set of cycles which forms a basis of a cycle space of a graph of the graph algorithm.

6.  Method according to any one of claims 1 to 5, wherein the determining a power grid topology is performed using a graph theory algorithm, in particular wherein the graph theory algorithm is a directed maximum spanning tree algorithm.

7.  Method according to any one of claims 1 to 6, wherein the at least one statistical evaluation is at least one of:

    Pearson correlation;
    Least Absolute Shrinkage and Selection Operator, LASSO;
    Least Absolute Shrinkage and Selection Operator with Least Angle Regression, LASSOLARS;
    mutual information, MI; or
    conditional independence.

8.  Method according to any one of claims 1 to 7, comprising:
    performing at least two statistical evaluations on measured data associated with the grid busses of the plurality of grid busses to calculate weights indicating that grid busses of a section or of a segment comprising at least two adjacent sections are connected to each other and wherein in particular the calculated weights of the two statistical evaluations of the grid busses of a section or of a segment are summarized or combined using a weight function.

9.  Method according to any one of claims 1 to 8, wherein the measured data associated with the grid busses of the plurality of grid busses is divided into a plurality of portions, each portion comprising measured data associated with the grid busses of the plurality of grid busses, and wherein the performing at least one statistical evaluation is performed for each portion.

10. Method according to claim 9, wherein confidence scores are calculated for the weights indicating that grid busses of a section or of a segment comprising at least two adjacent sections are connected to each other based on the occurrence of the weights in the portions.

**11.** Method according to any one of claims 1 to 10, comprising evaluating an existing power grid topology based on the determined power grid topology.

**12.** Method according to any one of claims 1 to 11, comprising identifying at least one fault in the power grid based on the determined power grid topology.

**13.** Method according to any one of claims 1 to 12, comprising determining a status of at least one breaker in the power grid based on the determined power grid topology.

**14.** A device for determining a power grid topology, the device comprising a memory for storing computer instructions and a processor in communication with the memory, wherein, when the processor executes the computer instructions, the processor is configured to carry out the method of any one of claims 1 to 13.

**15.** A computer program product comprising instructions which, when the program is executed by a computer, cause the computer to carry out the steps of the method of any one of claims 1 to 13.

**Fig. 1**

Determining at least one loop — S201

Determining grid busses of the loop — S202

Performing statistical evaluation(s) — S203

Determining power grid topology — S204

**Fig. 2**

**Fig. 3**

Fig. 4

**Fig. 5**

**Fig. 6**

Europäisches
Patentamt

European
Patent Office

Office européen
des brevets

# EUROPEAN SEARCH REPORT

Application Number

EP 21 15 9795

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 598 736 B2 (LUAN WENPENG [CA]; XU WILSUN [CA] ET AL.) 24 March 2020 (2020-03-24) | 1-13 | INV. H02J3/00 |
| A | * column 1, lines 14-19 * <br> * column 7, line 37 - column 8, line 7 * ----- | 14,15 | |
| A | CN 110 739 692 A (UNIV SHANGHAI ELECTRIC POWER) 31 January 2020 (2020-01-31) * figure 1 * * paragraphs [0045] - [0082] * ----- | 1-15 | |
| A | EP 3 065 250 B1 (SMART GRID SOLUTIONS AG [CH]) 7 November 2018 (2018-11-07) * figure 3 * * paragraphs [0037] - [0040] * ----- | 1-15 | |
| A | WO 2019/128335 A1 (ELECTRIC POWER SCIENCE & RES INSTITUTE OF STATE GRID TIANJIN ELECTRIC) 4 July 2019 (2019-07-04) * paragraphs [0082] - [0091] * ----- | 1-15 | |

TECHNICAL FIELDS SEARCHED (IPC)

H02J

The present search report has been drawn up for all claims

| Place of search | Date of completion of the search | Examiner |
|---|---|---|
| Munich | 16 July 2021 | Berger, Josef |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 15 9795

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2021

| Patent document cited in search report | | Publication date | Patent family member(s) | | Publication date |
|---|---|---|---|---|---|
| US 10598736 | B2 | 24-03-2020 | CA<br>US<br>WO | 2880502 A1<br>2015316620 A1<br>2014019055 A1 | 06-02-2014<br>05-11-2015<br>06-02-2014 |
| CN 110739692 | A | 31-01-2020 | NONE | | |
| EP 3065250 | B1 | 07-11-2018 | CH<br>EP | 710823 A1<br>3065250 A1 | 15-09-2016<br>07-09-2016 |
| WO 2019128335 | A1 | 04-07-2019 | CN<br>WO | 108173263 A<br>2019128335 A1 | 15-06-2018<br>04-07-2019 |

EPO FORM P0459

For more details about this annex : see Official Journal of the European Patent Office, No. 12/82